# EUROPEAN PATENT APPLICATION

(11) **EP 4 629 496 A1**
(43) Date of publication of application: **08.10.2025**
(21) Application number: 23902461.5
(22) Date of filing: 23.11.2023
(51) Int. Cl.: H02M 3/28, H02M 3/335

(54) **SWITCHING POWER SUPPLY CIRCUIT, SWITCHING POWER SUPPLY, ELECTRONIC DEVICE AND POWER SUPPLY SYSTEM**

(30) Priority: 15.12.2022 CN 202211615908
(71) Applicant: Huawei Technologies Co., Ltd., Shenzhen, Guangdong 518129 (CN)
(72) Inventor: HOU, Qinghui, Shenzhen, Guangdong 518129 (CN); YANG, Chengjun, Shenzhen, Guangdong 518129 (CN)
(74) Representative: Pfenning, Meinig & Partner mbB
(86) International application number: PCT/CN2023/133799
(87) International publication number: WO 2024/125262

(57) **Abstract**

A switching power supply circuit, a switching power supply, an electronic device, and a power supply system are provided, relate to the field of electronic technologies, and can reduce a switch turn-on loss, thereby facilitating high-frequency working and miniaturization of a topology. The switching power supply circuit includes: a transformer having a primary-side coil and a first coil; a first switch connected to the primary-side coil; a second switch and a first capacitor that are connected in series between a first end and a second end of the first coil; a second control chip, configured to: control, in a first phase, the second switch to be turned on, or control the second switch to be turned on for predetermined duration and then turned off; and a first control chip, configured to control, in the first phase, the first switch to be turned off. The second control chip controls, in a second phase after the first phase, the second switch to be turned off, the first control chip controls, in the second phase, the first switch to be turned on, and the switching power supply circuit charges the primary-side coil in the second phase. The first phase and the second phase are in a same working cycle.

## Description

This application claims priority to Chinese Patent Application No. 202211615908.4, filed with the China National Intellectual Property Administration on December 15, 2022 and entitled "SWITCHING POWER SUPPLY CIRCUIT, SWITCHING POWER SUPPLY, ELECTRONIC DEVICE, AND POWER SUPPLY SYSTEM", which is incorporated herein by reference in its entirety.

### TECHNICAL FIELD

Embodiments of this application relate to the field of electronic technologies, and in particular, to a switching power supply circuit, a switching power supply, an electronic device, and a power supply system.

### BACKGROUND

A switching power supply circuit is widely used in a power adapter (or a charger) of an electronic device such as a mobile phone, a watch, or a tablet computer, or is used in a switching power supply of a large-screen device, a desktop computer, or the like. Switching power supply circuits below 400 W account for about 70% to 80% of products on a market, most of which are flyback switching power supply circuits because of a simple circuit structure and low costs. Almost all common consumer power supply products such as a mobile phone charger and a notebook computer charger use flyback (flyback) switching power supply circuits.

In the flyback switching power supply circuit, a primary-side coil of a transformer is usually grounded through a switch (for example, a MOS transistor). Control of turn-off or turn-on of the MOS transistor is hard switching (that is, an on/off state is switched when a voltage or a current is not zero). That is, a voltage Vds between a source and a drain of the MOS transistor is high at a moment when the MOS transistor is turned on, and a current flowing through the MOS transistor is lost on the MOS transistor in a form of thermal energy, resulting in a large switch turn-on loss.

### SUMMARY

Embodiments of this application provide a switching power supply circuit, a switching power supply, an electronic device, and a power supply system, to reduce a switch turn-on loss.

According to a first aspect, a switching power supply circuit is provided. The switching power supply circuit includes: a transformer and a first switch, where the transformer has a primary-side coil and a first coil; a first end of the primary-side coil is connected to the first switch, for example, the first end of the primary-side coil is connected to a power supply end; and a second end of the primary-side coil is grounded through the first switch; a second switch and a first capacitor that are connected in series between a first end and a second end of the first coil; a first control chip, where the first control chip is connected to a control end of the first switch; and a second control chip, where the second control chip is connected to a control end of the second switch. Based on the foregoing hardware structure, the second control chip is configured to: in a first phase, control the second switch to be turned on, or control the second switch to be turned on for predetermined duration and then turned off; the first control chip is configured to control, in the first phase, the first switch to be turned off; and the second control chip is further configured to control, in a second phase after the first phase, the second switch to be turned off, the first control chip is further configured to control, in the second phase, the first switch to be turned on, and the switching power supply circuit charges the primary-side coil in the second phase, where the first phase and the second phase are in a same working cycle.

In this way, in the first phase, the second control chip controls the second switch to be turned on or controls the second switch to be turned on for the predetermined duration and then turned off. Therefore, a current Izvs is formed in a loop formed by connecting the first capacitor, the second switch, and the first coil in series, and the current Izvs flows through the primary-side coil to form a discharge current Ipzvs. In this case, discharging may be performed on a connection point SW between the first switch and the primary-side coil. When the first phase is long enough, an electric charge of a junction capacitor of the first switch may be released to zero, and a voltage of the connection point SW can decrease to zero. Therefore, when the second phase arrives, the voltage of the connection point SW may decrease as much as possible, to decrease a source-drain voltage Vds of the first switch. When the voltage of the SW decreases to zero in the first phase, zero voltage turn-on (zero voltage switching, ZVS) of the first switch may be implemented in the second phase. In this way, in the first phase, the junction capacitor of the first switch is discharged based on the discharge current Ipzvs, and electrical energy stored in the junction capacitor of the first switch is released to an inductor of the primary-side coil, so that a source-drain voltage Vds of the junction capacitor of the first switch effectively decreases. This effectively reduces a current flowing through the first switch at a moment when the first switch is turned on, reduces a switch turn-on loss, achieves objectives of saving electrical energy and improving efficiency, and also helps the switching power supply circuit to adapt to high-frequency working. Therefore, it is not necessary to use a switching device of a large size to adapt to the voltage Vds to turn on the switching device in a high-voltage scenario. This also facilitates miniaturization of a switching power supply. In addition, when the voltage of the SW decreases to zero in the first phase, zero voltage turn-on (zero voltage switching, ZVS) of the first switch may be implemented in the second phase. This may further reduce a switch turn-on loss.

In a possible implementation, the transformer further includes a secondary-side coil, the switching power supply circuit further includes a third switch and a second capacitor that are connected in series between a first end and a second end of the secondary-side coil, and two ends of the second capacitor are configured to connect to a load. The switching power supply circuit further includes a third control chip. The third control chip is connected to a control end of the third switch. The third control chip is configured to control, in the first phase and the second phase, the third switch to be turned off. The second control chip is further configured to control, in a third phase after the second phase, the second switch to be turned off, the first control chip is further configured to control, in the third phase, the first switch to be turned off, the third control chip is configured to control a turn-on duty cycle of the third switch in the third phase, and the switching power supply circuit charges the second capacitor through the secondary-side coil in the third phase. The first phase, the second phase, and the third phase are in a same working cycle. In this way, in the first phase, the second control chip controls the second switch to be turned on, and the first control chip controls the first switch to be turned off; in the second phase, the first control chip controls the first switch to be turned on, the switching power supply circuit charges the primary-side coil N1 through a power supply end, and the third control chip controls the third switch to be turned off; and in the third phase, the first control chip controls the first switch to be turned off, the third control chip controls the turn-on duty cycle of the third switch, and the switching power supply circuit charges the second capacitor through the secondary-side coil N2. In this way, normal working of a flyback switching power supply circuit is implemented. In addition, the second switch is turned on in the first phase, the first switch is turned on in the second phase, and the third switch is turned on in the third phase, to avoid a situation in which other switches are turned on at the same time in each phase, and dead time is set between the first phase and the second phase, and between the second phase and the third phase.

In a possible implementation, the first coil is a secondary-side coil, and two ends of the first capacitor are configured to connect to a load. The second control chip is further configured to control a turn-on duty cycle of the second switch in a third phase after the second phase, the first control chip is further configured to control, in the third phase, the first switch to be turned off, and the switching power supply circuit charges the first capacitor through the secondary-side coil in the third phase. The first phase, the second phase, and the third phase are in a same working cycle. In this way, in the first phase, the second control chip controls the second switch to be turned on, and the first control chip controls the first switch to be turned off; in the second phase, the first control chip controls the first switch to be turned on, the switching power supply circuit charges the primary-side coil N1 through a power supply end, and the second control chip controls the second switch to be turned off; and in the third phase, the first control chip controls the first switch to be turned off, the second control chip controls the turn-on duty cycle of the second switch, and the switching power supply circuit charges the first capacitor through the secondary-side coil N2. In this way, normal working of a flyback switching power supply circuit is implemented. In addition, the second switch is turned on in the first phase, the first switch is turned on in the second phase, and the second switch is turned on in the third phase, to avoid a situation in which other switches are turned on at the same time in each phase, and dead time is set between the first phase and the second phase, and between the second phase and the third phase.

In a possible implementation, duration of the first phase is shorter than duration of the second phase. In addition, with reference to a working principle of the flyback switching power supply, because the second phase is a main working period of the flyback power supply, a time length of the first phase is usually shorter than that of the second phase to ensure working efficiency.

In a possible implementation, duration of the first phase is shorter than duration of the third phase. In addition, with reference to a working principle of the flyback switching power supply, because the third phase is a main working period of the flyback power supply, a time length of the first phase is usually shorter than that of the third phase to ensure working efficiency.

In a possible implementation, the switching power supply circuit further includes a first inductor, the first inductor is connected to the first end of the primary-side coil, and the second end of the primary-side coil is connected to the first switch. For example, the first inductor is connected between the power supply end and the first end of the primary-side coil. The first inductor may be a leakage inductor Lk of the primary-side coil N1.

In a possible implementation, the switching power supply circuit further includes a bus capacitor, a first end of the bus capacitor is connected to the first end of the primary-side coil, a second end of the bus capacitor is grounded, and the second end of the primary-side coil is connected to the first switch. For example, the bus capacitor is connected between the power supply end and the ground.

In a possible implementation, the switching power supply circuit further includes a rectifier circuit, the rectifier circuit is connected to the first end of the primary-side coil, and the second end of the primary-side coil is connected to the first switch. For example, the rectifier circuit is connected to the power supply end.

In a possible implementation, the switching power supply circuit further includes a second inductor, a first diode, and a third capacitor. A first end of the second inductor is connected to the rectifier circuit, and a second end of the second inductor is connected to an anode of the first diode. A cathode of the first diode is connected to the first end of the primary-side coil, and the second end of the primary-side coil is connected to the first switch. For example, the cathode of the first diode is connected to the first end of the primary-side coil through the power supply end. A first end of the third capacitor is connected to the second end of the second inductor, and a second end of the third capacitor is connected to the second end of the primary-side coil. A topology formed by connecting the second inductor, the first diode, and the third capacitor to the first switch is mainly used for PFC control of the switching power supply circuit. In this way, it is equivalent to that PFC control and flyback control share the first switch. Because a switch in a PFC is omitted, costs can be greatly reduced.

In a possible implementation, the switching power supply circuit further includes a second diode and a fourth capacitor. A cathode of the second diode is connected to the first end of the primary-side coil. For example, the cathode of the second diode is connected to the first end of the primary-side coil through the power supply end. An anode of the second diode is connected to the second end of the third capacitor. A first end of the fourth capacitor is connected to the second end of the third capacitor, and a second end of the fourth capacitor is connected to the second end of the primary-side coil. Because of voltage division functions of the second diode and the fourth capacitor, the source-drain voltage Vds of the first switch may be clamped at a low level, to avoid device damage caused by an excessively high voltage Vds.

According to a second aspect, a switching power supply circuit is provided, including: a transformer and a first switch, where the transformer has a primary-side coil, a secondary-side coil, and a first coil, and the primary-side coil is connected to the first switch; a second switch and a first capacitor that are connected in series between a first end and a second end of the first coil; a third switch and a second capacitor that are connected in series between a first end and a second end of the secondary-side coil, where two ends of the second capacitor are configured to connect to a load; a first control chip, where the first control chip is connected to a control end of the first switch; a second control chip, where the second control chip is connected to a control end of the second switch; and a third control chip, where the third control chip is connected to a control end of the third switch.

According to a third aspect, a switching power supply is provided, including a housing, and the switching power supply circuit that is provided in the first aspect, the second aspect, or any one of the possible implementations of the first aspect or the second aspect and that is disposed in the housing.

In a possible implementation, the switching power supply includes a charger.

According to a fourth aspect, an electronic device is provided, including the switching power supply provided in the third aspect and the possible implementation of the third aspect, and a load connected to the switching power supply.

According to a fifth aspect, a power supply system is provided, including the switching power supply provided in the third aspect and the possible implementation of the third aspect, and an electronic device connected to the switching power supply.

For technical problems resolved and technical effects achieved in the second aspect to the fifth aspect and the possible implementations of the second aspect to the fifth aspect, refer to the related descriptions in the first aspect and the possible implementations of the first aspect. Details are not described herein again.

### BRIEF DESCRIPTION OF DRAWINGS

FIG. 1 is a diagram of a structure of a power supply system according to an embodiment of this application;
FIG. 2 is a diagram of a structure of an electronic device according to an embodiment of this application;
FIG. 3 is a diagram of a structure of a Type-C interface according to an embodiment of this application;
FIG. 4 is a diagram of a structure of a switching power supply circuit according to an embodiment of this application;
FIG. 5 is a diagram of a structure of a switching power supply circuit according to another embodiment of this application;
FIG. 6 is a diagram of a structure of a switching power supply circuit according to still another embodiment of this application;
FIG. 7 is a diagram of a structure of a switching power supply circuit according to yet another embodiment of this application;
FIG. 8 is a diagram of a structure of a switching power supply circuit according to another embodiment of this application;
FIG. 9 is a waveform diagram of Vg and Vds of Q1 according to an embodiment of this application;
FIG. 10 is a diagram of a structure of a switching power supply circuit according to still another embodiment of this application;
FIG. 11 is a diagram of a structure of a switching power supply circuit according to yet another embodiment of this application;
FIG. 12 is a waveform diagram of Vg of Q1, Q2, and Q3 according to an embodiment of this application;
FIG. 13 is a waveform diagram of Vg of Q1 and Q2 according to an embodiment of this application;
FIG. 14 is a waveform diagram of a mains supply according to an embodiment of this application;
FIG. 15 is a diagram of a signal curve of each node of a switching power supply circuit in phases t0 to t6 (44.847 ms to 44.858 ms) according to an embodiment of this application;
FIG. 16 is a diagram of an equivalent circuit of a switching power supply circuit according to an embodiment of this application;
FIG. 17 is a diagram of an equivalent circuit of a switching power supply circuit according to another embodiment of this application;
FIG. 18 is a diagram of an equivalent circuit of a switching power supply circuit according to still another embodiment of this application;
FIG. 19 is a diagram of an equivalent circuit of a switching power supply circuit according to yet another embodiment of this application;
FIG. 20 is a diagram of an equivalent circuit of a switching power supply circuit according to another embodiment of this application;
FIG. 21 is a diagram of an equivalent circuit of a switching power supply circuit according to still another embodiment of this application;
FIG. 22 is a diagram of an equivalent circuit of a switching power supply circuit according to an embodiment of this application;
FIG. 23 is a diagram of a structure of a switching power supply circuit according to another embodiment of this application;
FIG. 24 is a diagram of a structure of a switching power supply circuit according to still another embodiment of this application;
FIG. 25 is a diagram of a structure of a switching power supply circuit according to yet another embodiment of this application; and
FIG. 26 is a diagram of a structure of a switching power supply circuit according to another embodiment of this application.

### DESCRIPTION OF EMBODIMENTS

The technical solutions according to some embodiments of this application are clearly and completely described in the following with reference to the accompanying drawings.

The terms "first" and "second" mentioned below are merely intended for a purpose of description, and shall not be understood as an indication or implication of relative importance or implicit indication of a quantity of indicated technical features. Therefore, a feature limited by "first", "second", or the like may explicitly or implicitly include one or more features. In the descriptions of this application, unless otherwise stated, "a plurality of" means two or more than two. In addition, in this application, orientation terms such as "up" and "down" may include but are not limited to orientations schematically placed relative to components in the accompanying drawings. It should be understood that these directional terms may be relative concepts, and are used for relative description and clarification, and may be correspondingly changed based on changes in placement orientations of the components in the accompanying drawings. Unless otherwise expressly specified and limited, the term "connection" should be understood in a broad sense. For example, the "connection" may be a fixed connection, a detachable connection, or an integrated connection, or may be a direct connection or an indirect connection implemented through an intermediate medium. When being used to describe a three-port switch (which is also referred to as a switching device, for example, a switch transistor or a switching transistor), a "first end" and a "second end" may be connection ends of the switch, and a "control end" may be a control end of the switch. For example, for a metal-oxide-semiconductor field-effect transistor (metal-oxide-semiconductor field-effect transistor, MOSFET), the control end may be a gate (gate, g) of the MOS transistor, the first end may be a source (source, s) of the MOS transistor, and the second end may be a drain (drain, d) of the MOS transistor; or the first end may be a drain of the MOS transistor, and the second end may be a source of the MOS transistor. In embodiments of this application, each switch may include one MOSFET. However, to minimize an increase in internal resistance caused by a switch connected in series on a line, each switch may alternatively include two or more MOSFETs connected in parallel.

The following describes technical solutions of this application with reference to the accompanying drawings.

A switching power supply circuit and a switching power supply provided in embodiments of this application may be used in an electronic device, for example, a mobile phone, a tablet computer, a notebook computer, an ultra-mobile personal computer (ultra-mobile personal computer, UMPC), a handheld computer, a netbook, a personal digital assistant (personal digital assistant, PDA), a wearable electronic device, or a virtual reality device; or may be used in a charger of the electronic device.

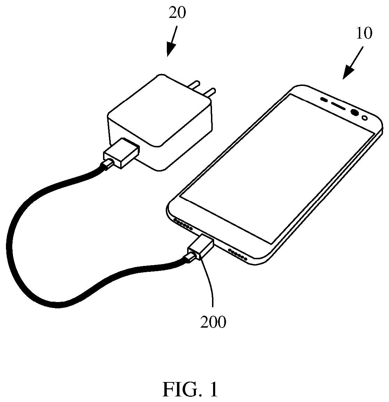

With reference to FIG. 1, an embodiment of this application provides a power supply system including a switching power supply 20 and an electronic device 10. Usually, the switching power supply 20 includes a housing, and a switching power supply circuit mounted in the housing. An input side of the switching power supply circuit is usually connected to a mains supply through a pin disposed on the housing, and an output side of the switching power supply circuit is connected to the electronic device through a plug 200. In addition, the switching power supply circuit may be usually soldered to a printed circuit board PCB in the housing. In some examples, the switching power supply 20 may be a separately sold product such as a charger or a power adapter. Alternatively, the switching power supply 20 may be a component integrated in the electronic device. In this way, the switching power supply 20 is connected to a load Rload inside the electronic device 10, to supply power to the load Rload.

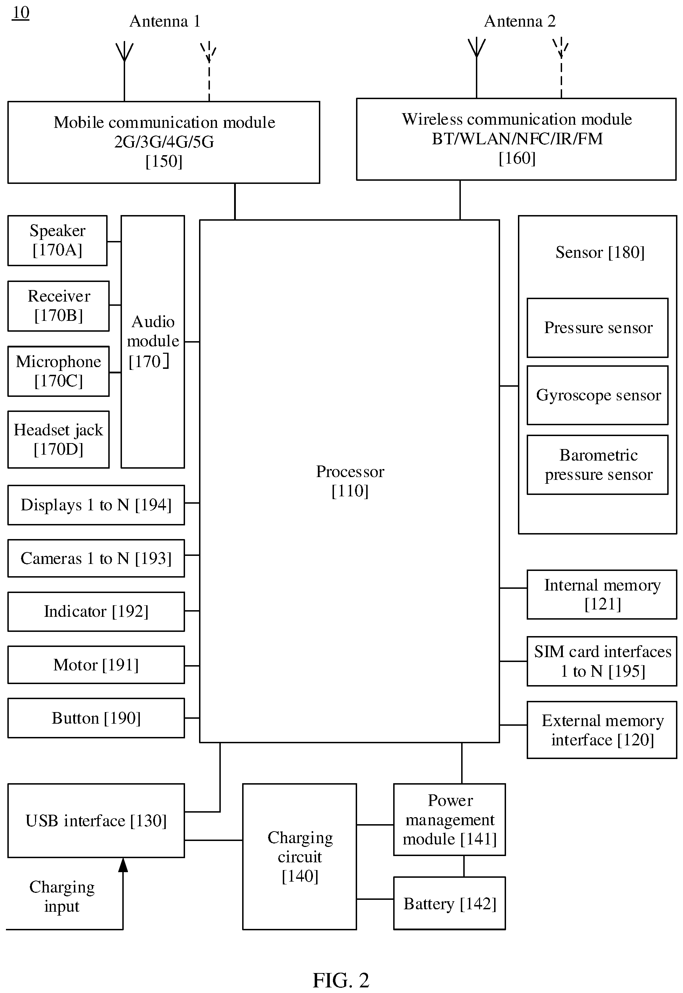

For example, FIG. 2 is a diagram of a structure of the electronic device 10.

As shown in FIG. 2, the electronic device 10 may include a processor 110, an external memory interface 120, an internal memory 121, a universal serial bus (universal serial bus, USB) interface 130, a charging circuit 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like.

It may be understood that the structure shown in this embodiment does not constitute a specific limitation on the electronic device 10. In some other embodiments of this application, the electronic device 10 may include more or fewer components than those shown in the figure, or a combination of some components, or splits from some components, or a different component layout. The components shown in the figure may be implemented by hardware, software, or a combination of software and hardware.

The processor 110 may include one or more processing units.

For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent devices, or may be integrated into one or more processors.

In some embodiments, the electronic device 10 may alternatively include one or more processors 110. The processor 110 may be a nerve center and a command center of the electronic device 10. The processor 110 may generate an operation control signal based on instruction operation code and a time sequence signal, to complete control of instruction fetching and instruction execution.

A memory may be further disposed in the processor 110, and is configured to store instructions and data.

In some embodiments, the memory in the processor 110 is a cache memory. The memory may store instructions or data just used or cyclically used by the processor 110. If the processor 110 needs to use the instructions or the data again, the processor 110 may directly invoke the instructions or the data from the memory. This avoids repeated access and reduces waiting time of the processor 110, so that system efficiency of the electronic device 10 is improved.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The USB interface 130 is an interface that conforms to a USB standard specification, and may be specifically a mini USB interface, a micro USB interface, a USB Type-C interface, or the like. The USB interface 130 may be configured to connect to the power adapter 20 to charge the electronic device 10, or may be configured to exchange data between the electronic device 10 and a peripheral device, or may be configured to connect to a headset for playing an audio through the headset.

It may be understood that an interface connection relationship between the modules illustrated in embodiments of the present invention is merely an example for description, and does not constitute a limitation on the structure of the electronic device 10. In some other embodiments of this application, the electronic device 10 may alternatively use an interface connection manner different from that in the foregoing embodiment, or use a combination of a plurality of interface connection manners.

The charging circuit 140 is configured to receive a charging input from a charger. The charger may be a wireless charger or a wired charger. When charging the battery 142, the charging circuit 140 may further supply power to the electronic device 10 through the power management module 141.

In some embodiments of wired charging, the charging circuit 140 may receive a charging input of a wired charger through the USB interface 130. In some embodiments of wireless charging, the charging circuit 140 may receive a wireless charging input through a wireless charging coil of the electronic device 10. In some examples of this application, the wireless charger may include the power adapter 20 and a wireless charging cradle or a wireless charging panel connected to the power adapter 20 through the USB interface 130. A transmitting coil configured to wirelessly charge the electronic device 10 is disposed on the wireless charging cradle or the wireless charging panel.

The power management module 141 is configured to connect to the battery 142, the charging circuit 140, and the processor 110. The power management module 141 receives an input from the battery 142 and/or the charging circuit 140, and supplies power to the processor 110, the internal memory 121, the display 194, the camera 193, the wireless communication module 160, and the like. The power management module 141 may be further configured to monitor parameters such as a battery capacity, a battery cycle count, and a battery health status (electric leakage or impedance).

In some embodiments, the power management module 141 may alternatively be disposed in the processor 110. In some other embodiments, the power management module 141 and the charging circuit 140 may alternatively be disposed in a same device.

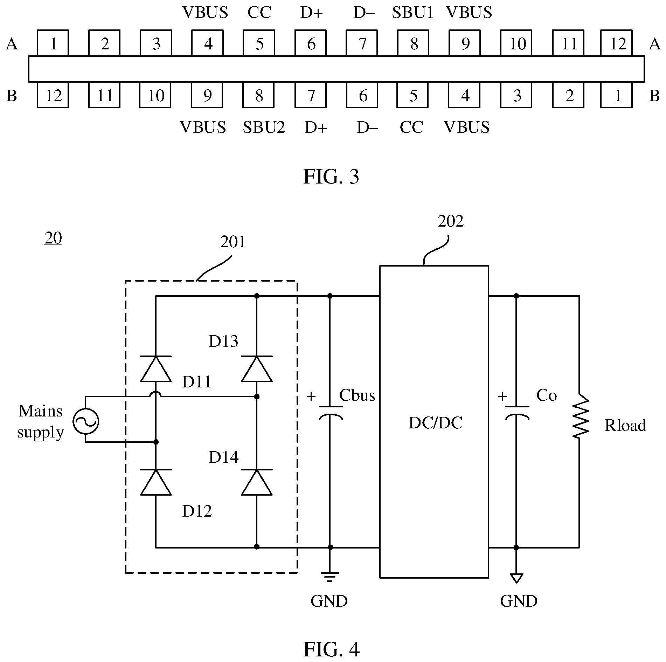

In addition, with reference to FIG. 1, to enable the electronic device 10 to be coupled to the switching power supply 20 (the charger), the switching power supply 20 may include the plug 200 plugged into the USB interface 130 of the electronic device (or the wireless charging cradle). Refer to FIG. 3. The plug may be a Type-C interface. The Type-C interface may include a CC pin shown in FIG. 3. A type of an external device coupled to the Type-C interface may be identified through the CC pin. In addition, as shown in FIG. 3, a surface A and a surface B of the Type-C interface each include two VBUS pins (a pin 4 and a pin 9 that are used to provide a USB voltage and that are used as voltage output ends in this embodiment of this application) that are symmetrically disposed, a CC pin (a pin 5), a D+ pin (a pin 6 on the surface A or a pin 7 on the surface B), a D- pin (a pin 7 on the surface A or a pin 6 on the surface B), and an SBU pin (a pin 8 that is a spare pin, which is marked as SBU1 on the surface A, and marked as SBU2 on the surface B). In addition, the plug may also have another pin used for grounding, idleness, or the like. When the plug 200 of the switching power supply 20 is plugged into the USB interface 130 of the electronic device 10, charging of or power supplying to the electronic device 10 may be implemented.

For an alternating current/direct current (AC/DC) switching power supply with an input power < 75 W, a common solution in the industry is to directly connect a conversion circuit (for example, a direct current/direct current conversion circuit, DC/DC) after a rectifier circuit. With reference to FIG. 4, a typical topology structure of a switching power supply circuit is provided. The switching power supply circuit includes a rectifier circuit 201 and a DC/DC 202. An input side of the rectifier circuit 201 is connected to a mains supply. Usually, the rectifier circuit 201 includes four rectifier diodes (D11 to D14). A cathode of D11 is connected to a cathode of D13, an anode of D11 is connected to a cathode of D12, an anode of D12 is grounded GND, an anode of D13 is connected to a cathode of D14, and an anode of D14 is connected to the ground GND. The mains supply is input from the anode of D11 and the anode of D13, and the cathode of D13 is connected to a power supply end of the subsequent-stage DC/DC 202 to output power supply to the subsequent-stage DC/DC 202. In addition, a ground end of the DC/DC 202 is grounded GND, and a first output end and a second output end of the DC/DC 202 are connected to a load Rload. In addition, a bus capacitor Cbus is further connected in series between the power supply end and the ground end of the DC/DC 202, a capacitor Co is further connected in series between the first output end and the second output end of the DC/DC 202, and the second output end of the DC/DC 202 is connected to the ground GND. Usually, an input side and an output side of the DC/DC 202 are electrically isolated. Therefore, in the following solution, the ground GND connected to the ground end in the input side of the DC/DC 202 is isolated from ground GND connected to the second output end in the output side of the DC/DC 202.

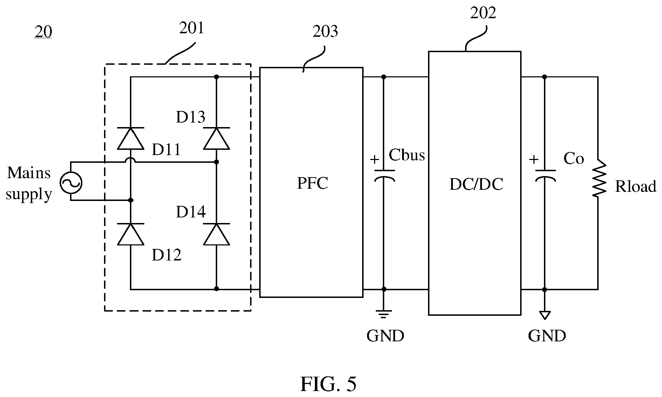

For an AC/DC switching power supply with an input power ≥ 75 W, to comply with a harmonic limitation of an International Electrotechnical Commission IEC 61000-3-2 (international electro technical commission, IEC) standard, a two-stage solution is adopted after the rectifier circuit. With reference to FIG. 5, a power factor correction (power factor correction, PFC) circuit 203 is further connected in series between the rectifier circuit 201 and the DC/DC 202.

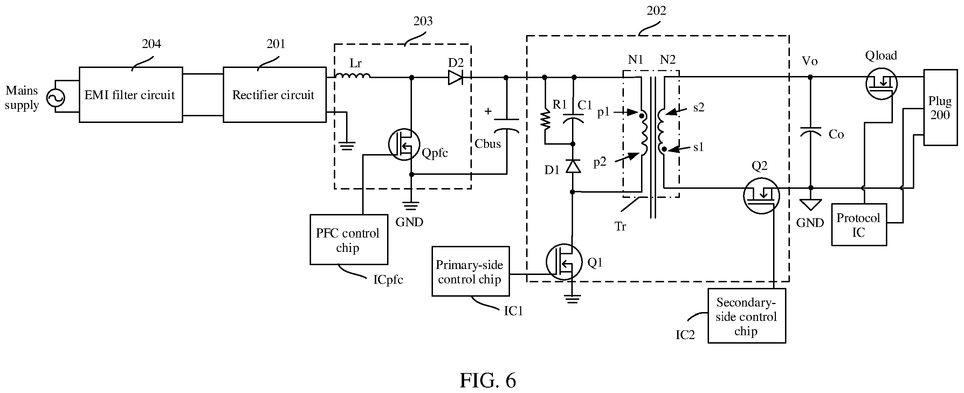

With reference to a flyback (flyback) switching power supply circuit shown in FIG. 6, the DC/DC 202 includes a transformer Tr, a switch Q1, a switch Q2, a primary-side control chip IC1, and a secondary-side control chip IC2 (where the secondary-side control chip is also referred to as a synchronous rectifier integrated circuit (synchronous rectifier integrated circuit, SRIC)).

The transformer Tr includes a primary-side coil N1 and a secondary-side coil N2. The primary-side coil is connected to the switch Q1. For example, a first end p1 of the primary-side coil N1 is connected to a first end of Cbus (the power supply end of the DC/DC 202), and a second end p2 of the primary-side coil N1 is connected to the ground GND through the switch Q1. A second end s2 of the secondary-side coil N2 is connected to a voltage output end Vo of the entire switching power supply circuit. For example, the voltage output end Vo may be a VBUS pin in the plug 200 (namely, the Type-C interface). A first end s1 of the secondary-side coil N2 is connected to the ground GND through the switch Q2. Certainly, in some examples, the switch Q2 may alternatively be disposed between the second end s2 of the secondary-side coil N2 and the voltage output end Vo. The capacitor Co is further disposed between the voltage output end Vo and the ground GND. In addition, a capacitor C1 and a diode D1 that are disposed between the first end p1 and the second end p2 of the primary-side coil N1 are further included. A first end of the capacitor C1 is connected to the first end p1 of the primary-side coil N1, a second end of the capacitor C1 is connected to a cathode of the diode D1, and an anode of the diode D1 is connected to the second end p2 of the primary-side coil N1. In addition, a resistor R1 is further connected in parallel between two ends of the capacitor C1, and the capacitor C1, the diode D1, and the resistor R1 form an RCD topology. The primary-side control chip IC1 is connected to a control end of the switch Q1, and the secondary-side control chip IC2 is connected to a control end of the switch Q2.

In addition, as shown in FIG. 6, a PFC 203 is further connected between the rectifier circuit 201 and the first end (the power supply end) of Cbus, and the PFC 203 includes a diode D2, an inductor Lr, and a switch Qfpc. A first end of the inductor Lr is connected to the rectifier circuit 201 (the cathode of D11), a second end of the inductor Lr is connected to an anode of the diode D2, and a cathode of the diode D2 is connected to the first end of Cbus as a power supply end. The anode of the diode D2 is further connected to the ground GND through the switch Qfpc. In addition, a PFC control chip ICpfc is connected to a control end of the switch Qfpc.

In addition, an electromagnetic compatibility (electromagnetic compatibility, EMC) filter circuit 204 may be further connected in series between an input end of the rectifier circuit 201 (the anode of D11 and the anode of D13) and the mains supply (usually, the EMC circuit includes an inductor and a capacitor). One end of the capacitor Co is used as the voltage output end Vo of the entire switching power supply circuit, and a load switch Qload may be further connected between the voltage output end Vo and the plug 200. A control end of the switch Qload and the plug 200 are further connected to a protocol integrated circuit IC. Usually, in some examples, the first end p1 of the primary-side coil N1 and the first end s1 of the secondary-side coil N2 may also be referred to as dotted terminals, and the second end p2 of the primary-side coil N1 and the second end s2 of the secondary-side coil N2 may be referred to as undotted terminals. Certainly, a person skilled in the art may further define another naming manner for each coil. This is not limited in embodiments of this application.

In this way, an alternating current mains supply flows through the EMC filter circuit 204 (where electromagnetic interference, including, for example, common-mode interference and differential-mode interference, from a power grid is removed), and an alternating current is filtered into a direct current through the rectifier circuit 201. Then, the PFC control chip ICpfc controls a duty cycle of the switch Qpfc to adjust a power factor of the direct current. Then, the adjusted direct current is input to the DC/DC 202 for voltage conversion. A control signal (which may be, for example, a pulse width modulation (pulse width modulation, PWM) signal) output by the primary-side control chip IC1 controls turn-on or cut-off of the switch Q1, and a control signal (which may be, for example, a PWM signal) output by the secondary-side control chip IC2 controls turn-on or cut-off of the switch Q2. A flyback working principle of the switching power supply is as follows: During a turn-on period of the switch Q1, energy is stored in the transformer Tr through the primary-side winding N1. At this time, the switch Q2 is turned off, and the voltage output end Vo of the entire switching power supply circuit is powered by the capacitor Co. During a turn-off period of the switch Q1, the switch Q2 is turned on, and energy stored in the transformer Tr is released through the secondary-side winding N2. The primary-side control chip IC1 controls a turn-on duty cycle or a switching frequency of the switch Q1 to implement stable power output. To adjust an output voltage, the protocol IC interacts with an electronic device to implement adjustment of the output voltage. Certainly, it should be noted that control of the protocol IC is not involved in the following example. Therefore, in the following example, the accompanying drawings are simplified as follows: Two ends of the capacitor Co are directly connected to the load Rload. It may be understood that, when the switching power supply is used as an independent product, the load Rload is a load of the electronic device. It may be considered that the load Rload is connected to the switching power supply circuit through the plug 200, and an output power is negotiated through the protocol IC.

In this way, with reference to FIG. 5 and FIG. 6, the added PFC circuit 203 causes an inductor Lr, a power switch Qpfc, a diode D2, and a PFC control chip ICpfc to be added, which increases costs by 20% to 30%. Especially for current mobile phones, accessories, PCs, and the like, a mainstream power is within 135 W, and a price-performance ratio brought by adding the PFC circuit 203 is not high. In addition, after the PFC 203 is added, the power also goes through two stages, and efficiency is low. In addition, with reference to the DC/DC 202 shown in FIG. 6, because an RCD (where R1, C1, and D1 are connected to form a topology) is configured to absorb leakage inductor energy of the transformer Tr, the energy is finally lost on the resistor R1. At the same time, when a hard switching manner is used to perform control of the switch Q1 (that is, when state switching of the switch Q1 is controlled (from turn-off to turn-on), a source-drain current Ids and/or a source-drain voltage Vds of the switch Q1 are/is high), a working frequency is difficult to exceed 200 kHz, and two-stage efficiency is about 92%.

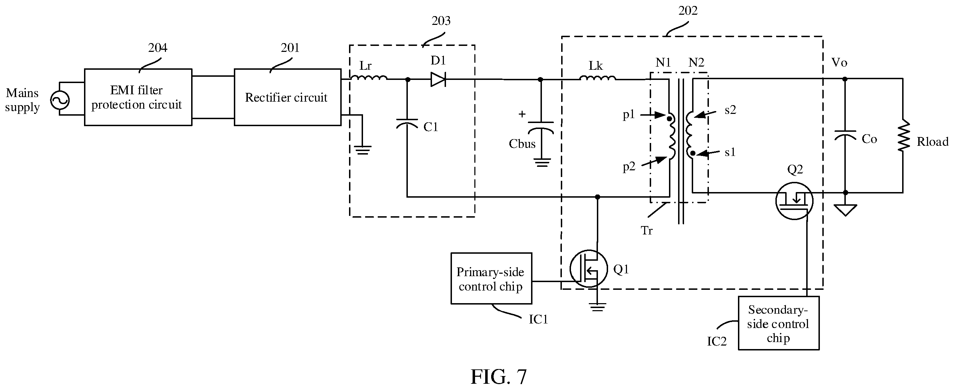

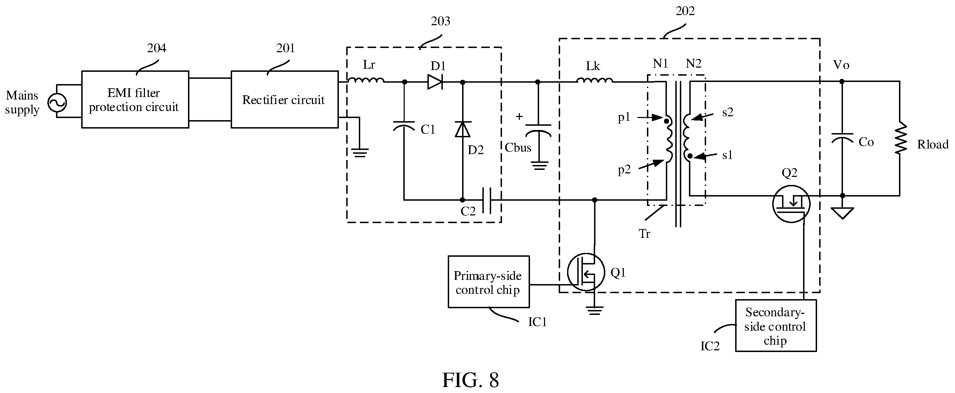

In FIG. 7, to resolve a problem of a cost increase caused by the added PFC circuit 203, a structure of a PFC circuit 203 including an inductor Lr, a diode D1, and a capacitor C1 is provided. A first end of the inductor Lr is connected to the rectifier circuit 201 (the cathode of D11), a second end of the inductor Lr is connected to an anode of the diode D1, and a cathode of the diode D1 is connected to the first end of the bus capacitor Cbus. The anode of the diode D2 is further connected to the second end p2 of the primary-side coil N1 through the capacitor C1. In this way, it is equivalent to that PFC control and flyback control share the power switch Q1. Because the switch Qpfc is omitted, costs can be greatly saved. In addition, because the RCD topology is canceled in the DC/DC 202, circuit efficiency can also be improved. In addition, in a circuit structure shown in FIG. 8, the PFC circuit 203 further includes: a capacitor C2 connected in series between the capacitor C1 and the second end p2 of the primary-side coil N1, and a diode D2 connected in series between the capacitor C2 and the cathode of the diode D1. An anode of the diode D2 is connected to the capacitor C2, and a cathode of the diode D2 is connected to the cathode of the diode D1. Because of voltage division functions of the diode D2 and the capacitor C2, the source-drain voltage Vds of Q1 may be clamped at a low level, to avoid device damage caused by an excessively high voltage Vds.

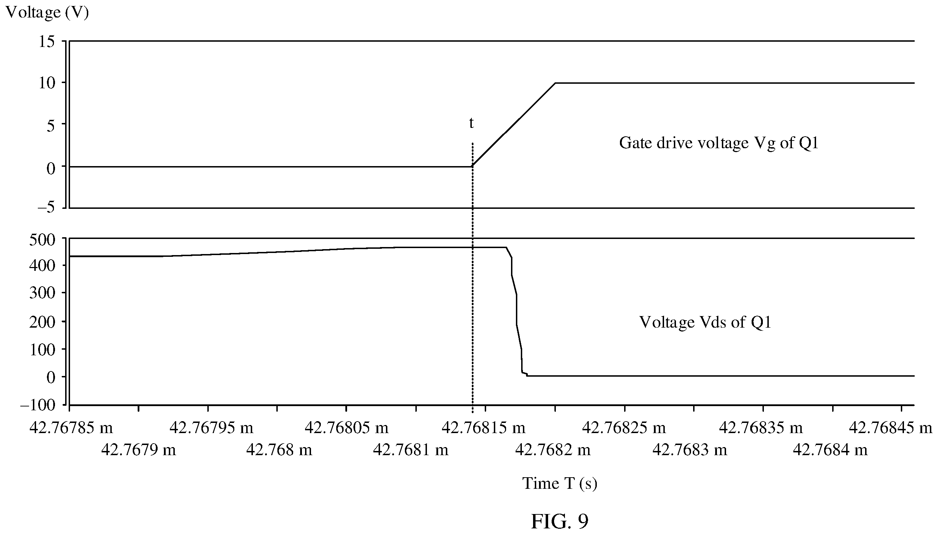

However, with reference to curves of a gate drive voltage Vg and a source-drain voltage Vds of Q1 in FIG. 9, it may be learned that, after time t, a state of Q1 is switched from a turn-off state to a turn-on state under driving of the gate drive voltage Vg, but Vds is still a high voltage of about 430 V. Therefore, at a moment when Q1 is turned on, a resistance of Q1 decreases, and a current flowing through Q1 is infinite, that is, at the moment when the switch Q1 is turned on, the voltage Vds is a high voltage, which causes a large turn-on loss, and limits high-frequency working of the topology. In addition, to adapt to high-frequency working of the topology, a switching device of a large size is usually needed to adapt to the voltage Vds to turn on the switching device in a high-voltage scenario. This also limits miniaturization of the switching power supply.

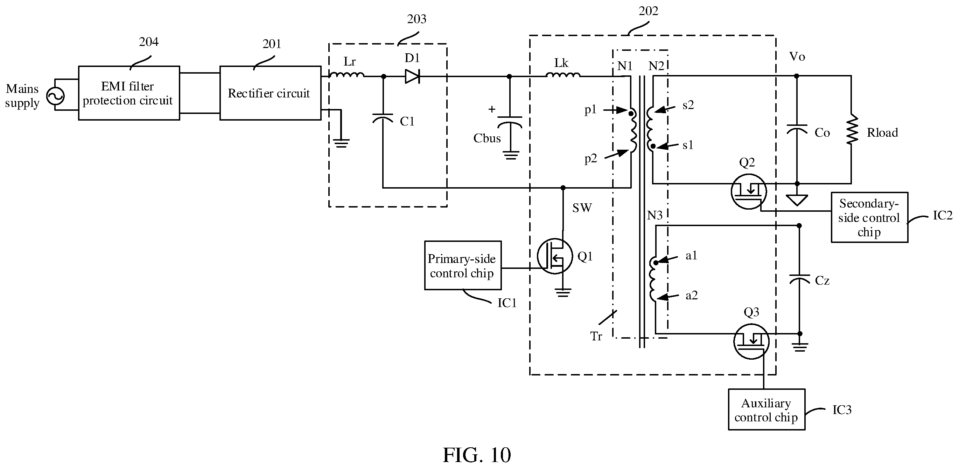

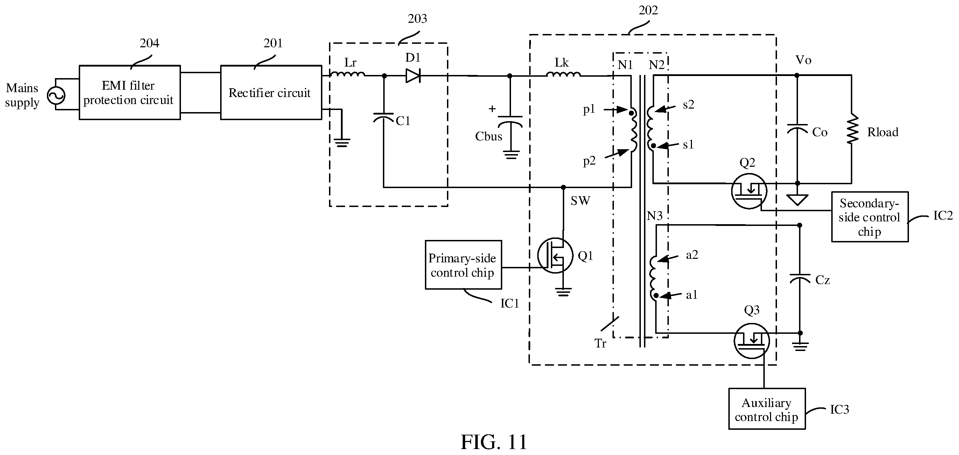

To resolve the foregoing problem, an embodiment of this application provides a switching power supply circuit. With reference to FIG. 10 or FIG. 7, the switching power supply circuit includes the following structure:
a transformer Tr and a first switch. The transformer Tr has a primary-side coil N1 and a first coil (where the first coil may be the secondary-side coil N2 in FIG. 7 or an auxiliary coil N3 in FIG. 11). The primary-side coil N1 is connected to the first switch. For example, the first switch may be the switch Q1 in FIG. 7. A first end p1 of the primary-side coil N1 is connected to a power supply end (for example, one end of the bus capacitor Cbus), and a second end p2 of the primary-side coil N1 is grounded GND through the switch Q1.

The switching power supply circuit further includes a second switch and a first capacitor that are connected in series between a first end and a second end of the first coil.

For example, with reference to FIG. 7, the first coil may be the secondary-side coil N2, the second switch may be the switch Q2, and the first capacitor may be the capacitor Co. The capacitor Co, the secondary-side coil N2, and the switch Q2 are connected in series. As shown in FIG. 7, one end of the capacitor Co is connected to the second end s2 of the secondary-side coil N2, and the switch Q2 may be connected in series between the first end s1 of the secondary-side coil N2 and the other end of the capacitor Co; or one end of the capacitor Co is connected to the first end s1 of the secondary-side coil N2, and the switch Q2 is connected in series between the second end s2 of the secondary-side coil N2 and the other end of the capacitor Co. Alternatively, with reference to FIG. 10, the transformer Tr has an auxiliary coil N3 in addition to the secondary-side coil N2. The first coil may be the auxiliary coil N3, the second switch may be a switch Q3, and the first capacitor may be a capacitor Cz. The capacitor Cz, the auxiliary coil N3, and the switch Q3 are connected in series. As shown in FIG. 10, one end of the capacitor Cz is connected to a first end a1 of the auxiliary coil N3, and the switch Q3 may be connected in series between a second end a2 of the auxiliary coil N3 and the other end of the capacitor Cz; or one end of the capacitor Cz is connected to a second end a2 of the auxiliary coil N3, and the switch Q3 is connected in series between a first end a1 of the auxiliary coil N3 and the other end of the capacitor Cz.

Optionally, the switching power supply circuit further includes a primary-side control chip IC1 and a second control chip. The primary-side control chip IC1 is connected to a control end of the first switch, and the second control chip is connected to a control end of the second switch. For example, with reference to FIG. 7, the second control chip may be the secondary-side control chip IC2, the second switch may be the switch Q2, and the secondary-side control chip IC2 is connected to the control end of the switch Q2. For another example, with reference to FIG. 10, the second control chip may be an auxiliary control chip IC3, the second switch may be the switch Q3, and the auxiliary control chip IC3 is connected to a control end of the switch Q3. Certainly, when the first coil is the auxiliary coil N3, FIG. 10 further shows the secondary-side coil N2, the switch Q2, and the capacitor Co. For a connection relationship between the secondary-side coil N2, the switch Q2, and the capacitor Co, refer to FIG. 7. Details are not described again.

Based on the foregoing hardware connection structure, functions of each control chip are as follows:
The second control chip is configured to: in a first phase, control the second switch to be turned on, or control the second switch to be turned on for predetermined duration and then turned off. A first control chip is configured to control, in the first phase, the first switch to be turned off. The second control chip is further configured to control, in a second phase after the first phase, the second switch to be turned off, the first control chip is further configured to control, in the second phase, the first switch to be turned on, and the switching power supply circuit charges the primary-side coil through the power supply end in the second phase. The first phase and the second phase are in a same working cycle.

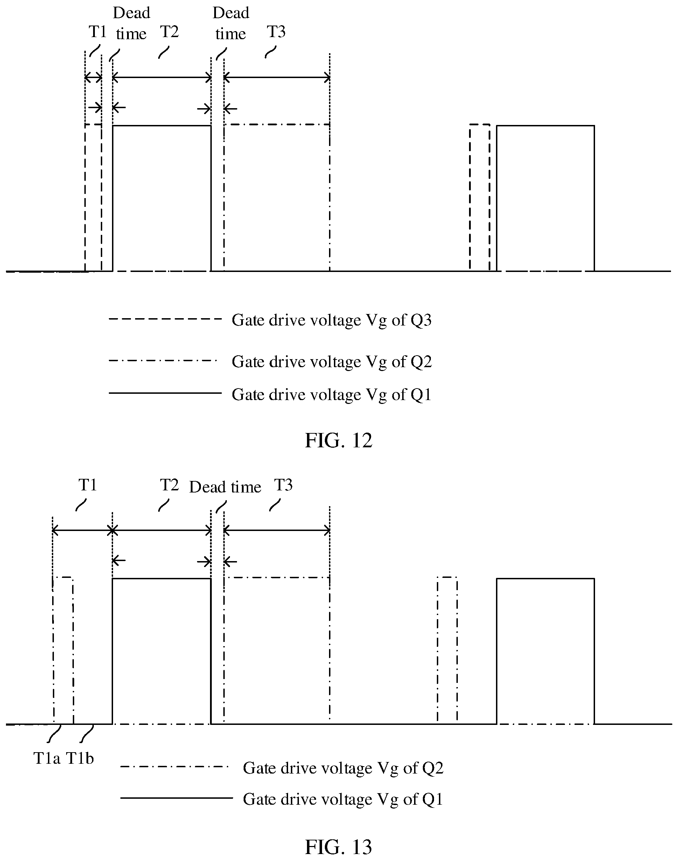

Specifically, by using an example of the topology structure that is of the switching power supply circuit and that is shown in FIG. 10, refer to FIG. 12 that shows a gate drive voltage Vg input by each control chip at a gate of a corresponding switch. In a first phase T1, the auxiliary control chip IC3 controls the switch Q3 to be turned on, the primary-side control chip IC1 controls the switch Q1 to be turned off, and the secondary-side control chip IC2 controls the switch Q2 to be turned off. In a second phase T2, the auxiliary control chip IC3 controls the switch Q3 to be turned off, the primary-side control chip IC1 controls the switch Q1 to be turned on, the switching power supply circuit charges the primary-side coil N1 through the power supply end, and the secondary-side control chip IC2 controls the switch Q2 to be turned off. In a third phase T3, the auxiliary control chip IC3 controls the switch Q3 to be turned off, the primary-side control chip IC1 controls the switch Q1 to be turned off, the secondary-side control chip IC2 controls a turn-on duty cycle of the switch Q2 (in FIG. 12, a duty cycle of 100% is used as an example), and the switching power supply circuit charges the capacitor Co through the secondary-side coil N2. In addition, the switch Q3 is turned on in the first phase T1, the switch Q1 is turned on in the second phase T2, and the switch Q2 is turned on in the third phase T3, to avoid a situation in which other switches are turned on at the same time in each phase, and dead time is set between the first phase T1 and the second phase T2, and between the second phase T2 and the third phase T3. In addition, with reference to the description of the working principle of the flyback switching power supply, because the second phase T2 and the third phase T3 are main working periods of the flyback power supply, a time length of the first phase T1 is usually shorter than a time length of the second phase T2, and the time length of the first phase T1 is also usually shorter than a time length of the third phase T3, to ensure working efficiency. The first phase, the second phase, and the third phase are in a same working cycle.

In this way, in the first phase T1, the auxiliary control chip IC3 controls the switch Q3 to be turned on. Therefore, a current Izvs in a direction from the first end a1 to the second end a2 of N3 is formed in a loop formed by connecting the capacitor Cz, the switch Q3, and the auxiliary coil N3 in series. Then, the current Izvs flows through the primary-side coil N1 to form a discharge current Ipzvs in a direction from the second end p2 to the first end p1. In this case, discharging may be performed on a connection point SW between the switch Q1 and the primary-side coil N1 based on the current Ipzvs. When the first phase T1 is long enough, an electric charge of a junction capacitor of the switch Q1 may be released to zero, and a voltage of the connection point SW can decrease to zero. Therefore, when the second phase T2 arrives, the voltage of the connection point SW may decrease as much as possible, to decrease the source-drain voltage Vds of the switch Q1. When the voltage of the SW decreases to zero in the first phase, zero voltage turn-on (zero voltage switching, ZVS) may be implemented in the second phase. In this way, in the first phase, the junction capacitor of the switch Q1 is discharged based on the discharge current Ipzvs, and electrical energy stored in the junction capacitor of the switch Q1 is released to an inductor of the primary-side coil, so that a source-drain voltage Vds of the junction capacitor of the switch Q1 effectively decreases. This effectively reduces a current flowing through the switch Q1 at a moment when the switch Q1 is turned on, reduces a switch turn-on loss, achieves objectives of saving electrical energy and improving efficiency, and also helps the switching power supply circuit to adapt to high-frequency working. Therefore, it is not necessary to use a switching device of a large size to adapt to the voltage Vds to turn on the switching device in a high-voltage scenario. This also facilitates miniaturization of a switching power supply. In addition, when the voltage of the SW decreases to zero in the first phase, zero voltage turn-on (zero voltage switching, ZVS) of the switch Q1 may be implemented in the second phase. This may further reduce a switch turn-on loss. In addition, with reference to FIG. 11, winding directions of the first end a1 and the second end a2 of the auxiliary coil N3 may be further exchanged.

In another example, by using an example of the topology structure that is of the switching power supply circuit and that is shown in FIG. 7, refer to FIG. 13 that shows a gate drive voltage Vg input by each control chip at a gate of a corresponding switch. In a first phase T1, the secondary-side control chip IC2 controls the switch Q2 to be turned on for predetermined duration and then turned off, and the primary-side control chip IC1 controls the switch Q1 to be turned off. In a second phase T2, the primary-side control chip IC1 controls the switch Q1 to be turned on, the switching power supply circuit charges the primary-side coil N1 through the power supply end, and the secondary-side control chip IC2 controls the switch Q2 to be turned off. In a third phase T3, the primary-side control chip IC1 controls the switch Q1 to be turned off, the secondary-side control chip IC2 controls a turn-on duty cycle of the switch Q2 (in FIG. 13, a duty cycle of 100% is used as an example), and the switching power supply circuit charges the capacitor Co through the secondary-side coil N2. The first phase T1, the second phase T2, and the third phase T3 are in a same working cycle. In this way, in the first phase T1, the secondary-side control chip IC2 controls the switch Q2 to be turned on. Therefore, a current Izvs in a direction from the second end s2 to the first end s1 of N2 is formed in a loop formed by connecting the capacitor Co, the switch Q2, and the secondary-side coil N2 in series. Then, the current Izvs flows through the primary-side coil N1 to form a discharge current Ipzvs in a direction from the second end p2 to the first end p1. Specifically, with reference to FIG. 7 and FIG. 12, in duration T1a of the first phase T1, the capacitor Co charges the secondary-side coil N2 when Q2 is turned on. A current used by the capacitor Co to charge the secondary-side coil N2 is injected from the undotted terminal (s2) of the secondary-side coil N2. Therefore, a direction of the formed current Izvs is from the undotted terminal (s2) to the dotted terminal (s1). A voltage of the primary-side coil N1 is clamped by an induced magnetic field of the secondary-side coil N2, and a voltage VN1 of the primary-side coil N1=Vzvs/N2*N1. Vzvs is a voltage of the secondary-side coil N2, N2 is a quantity of turns of the secondary-side coil, N1 is a quantity of turns of the primary-side coil, VN1 indicates that a dotted terminal p1 is negative (-) and an undotted terminal p2 is positive (+). Because Q1 is turned off, a current from the dotted terminal p1 to the undotted terminal p2 cannot be generated. Then, in duration T1b of the first phase T1, after Q2 is turned off, the current Izvs stops being generated, the transformer starts to demagnetize, and the current Ipzvs from the undotted terminal p2 to the dotted terminal p1 is generated. Therefore, discharging may be performed on a connection point SW between the switch Q1 and the primary-side coil N1 based on the current Ipzvs. When the second phase T2 arrives, a voltage of the connection point SW may decrease as much as possible, thereby decreasing a source-drain voltage Vds of the switch Q1. When the first phase T1 is long enough, an electric charge of a junction capacitor of the switch Q1 may be released to zero, the voltage of the connection point SW can decrease to zero, and zero voltage turn-on (zero voltage switching, ZVS) may be implemented in the second phase.

In addition, with reference to FIG. 10 and FIG. 11, the switching power supply circuit further includes an inductor Lr, a diode D1, and a capacitor C1. For a connection relationship and a function of the inductor Lr, the diode D1, and the capacitor C1, refer to the description in FIG. 7. Details are not described herein again. FIG. 10 and FIG. 11 further show an inductor Lk (namely, a leakage inductor of the primary-side coil N1) connected between the first end p1 of the coil N1 and the power supply end (the bus capacitor Cbus).

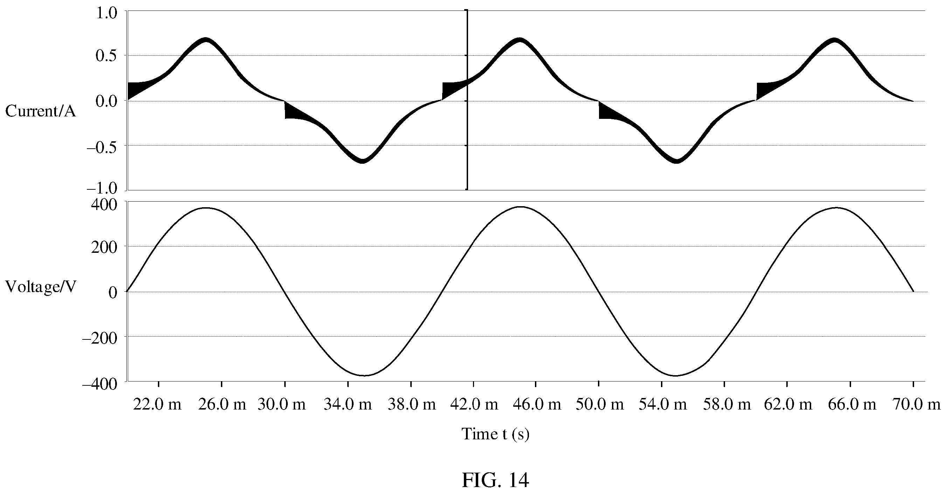

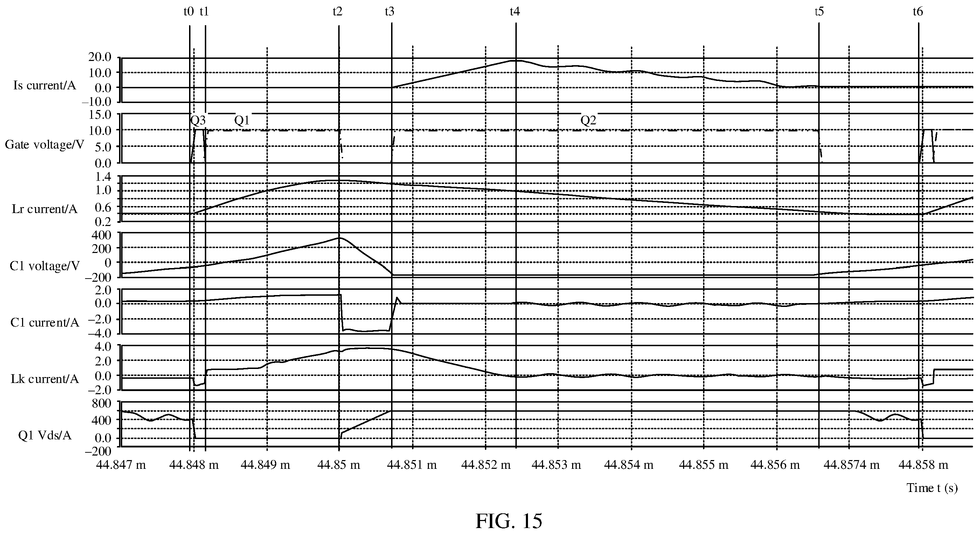

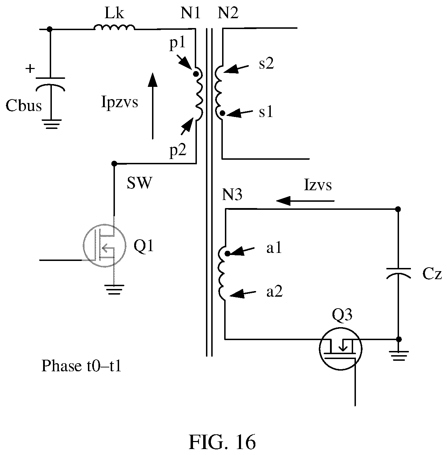

The following uses an example in which an input mains supply uses a current waveform and a voltage waveform shown in FIG. 14, and the input mains supply is a 50 Hz alternating current. With reference to signal curves of each node of the switching power supply circuit shown in FIG. 10 in phases t0 to t6 (44.847 ms to 44.858 ms) shown in FIG. 15, and with reference to an equivalent circuit diagram (with reference to FIG. 16 to FIG. 21) of each phase, a working cycle of the switching power supply circuit is described as follows:
Before a moment t0, a gate voltage Vg output by the primary-side control chip IC1 to a gate of the switch Q1 is at a low level (0 V), a gate voltage Vg output by the secondary-side control chip IC2 to a gate of the switch Q2 is at a low level (0 V), and a gate voltage Vg output by the auxiliary control chip IC3 to a gate of the switch Q3 is at a low level (0 V); the switch Q1 connected to the primary-side coil N1 is turned off under control of the primary-side control chip IC1, the switch Q2 connected to the secondary-side coil N2 is turned off under control of the secondary-side control chip IC2, and the switch Q3 connected to the auxiliary coil N3 is turned off under control of the auxiliary control chip IC3; a topology of the flyback switching power supply circuit works in a discontinuous current mode (discontinuous current mode, DCM); and a secondary-side current Is is 0. Currents flowing through the inductor Lr, the inductor Lk, and the capacitor C1 are stable at a low level, the source-drain voltage Vds of the switch Q1 is in a resonant state, and a voltage of the capacitor C1 gradually increases.

In a phase t0-t1 (namely, the phase T1 in FIG. 12), starting from the moment t0, the gate voltage Vg output by the auxiliary control chip IC3 to the gate of the switch Q3 is at a high level (10 V), the switch Q3 is turned on, and an equivalent circuit is shown in FIG. 16. Because the switch Q3 is turned on, the capacitor Cz charges the auxiliary coil N3, the auxiliary coil N3 generates a current Izvs flowing from the first end a1 to the second end a2, and the primary-side coil N1 generates a discharge current Ipzvs flowing from the second end p2 to the first end p1. The junction capacitor (a junction capacitor between a source and a drain) of the switch Q1 is discharged based on Ipzvs, and the voltage of the connection point SW decreases. If duration of the phase t0-t1 is long enough, the voltage of the connection point SW (Q1 Vds) decreases to zero. In the phase t0-t1, the secondary-side current Is is 0, a current flowing through the inductor Lr gradually increases after the switch Q3 is turned on, and a current and a voltage of the capacitor C1 gradually increase. Because a direction of the discharge current Ipzvs is opposite to a direction of a charge current of the inductor Lk, a current of the inductor Lk decreases.

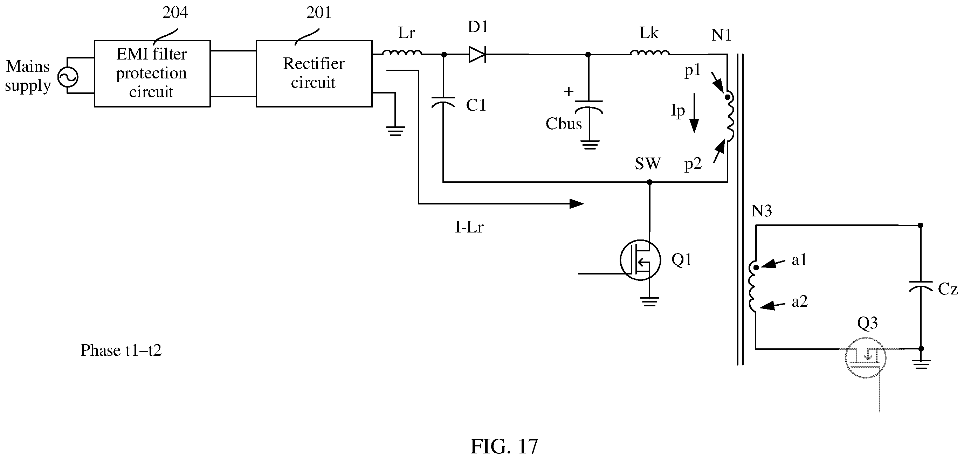

In a phase t1-t2 (namely, the phase T2 in FIG. 12), at a moment t1, the gate voltage Vg output by the auxiliary control chip IC3 to the gate of the switch Q3 is at a low level (0 V), and Q3 is turned off; the gate voltage Vg output by the primary-side control chip IC1 to the gate of the switch Q1 is at a high level (10 V), and Q1 is turned on; and the gate voltage Vg output by the secondary-side control chip IC2 to the gate of the switch Q2 is at a low level (0 V), Q2 remains turned off, and the secondary-side current Is is still 0. An equivalent circuit is shown in FIG. 17. At the moment t1, Vds of the switch Q1 has decreased to zero, and energy of the junction capacitor of the switch Q1 is recycled to the bus capacitor Cbus through the primary-side coil N1, to implement zero voltage turn-on (zero voltage switching, ZVS). A mains supply voltage Vgrid charges the capacitor C1 through Lr, a current is I_Lr, I_Lr continuously increases, and a current and a voltage of the capacitor C1 continuously increase. In addition, the capacitor Cbus charges the primary-side coil N1, a current is Ip, Ip continuously increases, and a current of the inductor Lk continuously increases. In addition, the current Ip flows from the first end p1 to the second end p2 of the primary-side coil N1 in this phase. Therefore, in this phase, the auxiliary coil N3 generates a current opposite to Ip (a current from the second end a2 to the first end a1) to charge Cz. In this way, in a phase t0-t1 of a next working cycle, Cz outputs a current Izvs to the auxiliary coil N3 (usually, as shown in FIG. 12, a source s of Q3 is connected to one end of the capacitor Cz, and a drain d of Q3 is connected to the first end a1 of the secondary-side coil N3. Q3 is in a turn-off state. However, a body diode of Q3 is reversely connected between the drain d and the source s (that is, an anode of the body diode of Q3 is connected to the source s, and a cathode of the body diode of Q3 is connected to the drain d). When Q3 is in the turn-off state, a current from the drain d to the source s may be cut off, but a current from the source s to the drain d may flow through the body diode of Q3).

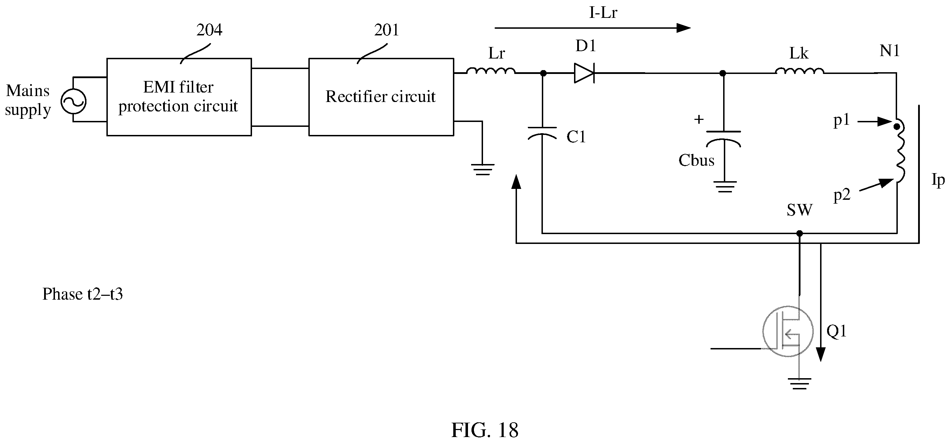

In a phase t2-t3, at a moment t2, the gate voltage Vg output by the primary-side control chip IC1 to the gate of the switch Q1 is at a low level (0 V), the switch Q1 is turned off, Q2 remains turned off, and the secondary-side current Is is still 0; and an equivalent circuit is shown in FIG. 18. A leakage inductor Lk and a magnetic inductor Lm of the primary-side coil N1 charge the capacitor C1 and the junction capacitor of the switch Q1 (at a node SW, a current Ip is shunted to the capacitor C1 and the junction capacitor of Q1), and a current of the leakage inductor Lk gradually decreases after reaching a maximum. Because Q1 is turned off, a current direction of the capacitor C1 is reversed in this phase, a voltage of C1 gradually decreases, and a voltage of the connection point SW (Q1 Vds) gradually increases. The capacitor C1 is far greater than the junction capacitor of the switch Q1, and Vds of the switch Q1 increases slowly. At the moment t2, when the gate voltage Vg of Q1 is reversed to be at a low level, Vds increases limitedly. Therefore, Vds is close to 0, and Vds zero voltage turn-off can be basically implemented, and a turn-off loss is theoretically zero. In addition, the bus capacitor Cbus is charged through the diode D1 based on a current I_Lr of the inductor Lr. In this phase, there is a voltage boost function. Therefore, a voltage of the bus capacitor Cbus is usually higher than a peak value of a mains supply voltage. When a voltage of the magnetic inductor Lm of the primary-side coil N1 is equal to a reflected voltage, the secondary-side current Is starts to be conducted, and the phase ends.

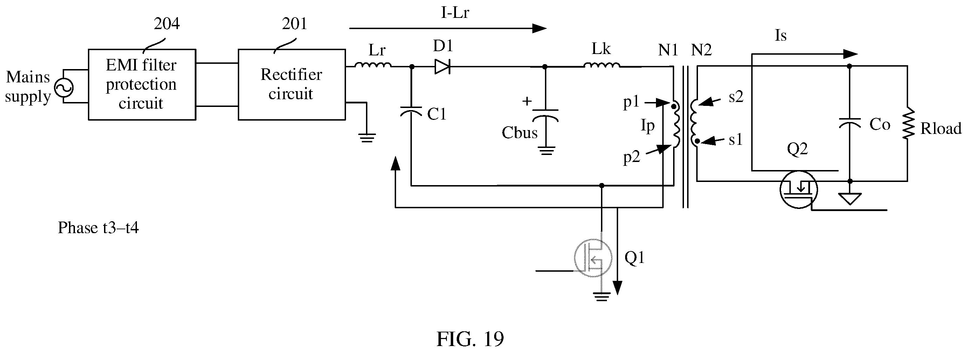

In a phase t3-t4, an equivalent circuit is shown in FIG. 19. At a moment t3, the secondary-side coil N2 outputs a voltage to the load circuit Rload. In addition, when the voltage output by the secondary-side coil N2 is greater than or equal to the voltage of the capacitor Co, the secondary-side coil N2 starts to conduct a current Is, the current Is continuously increases, the gate voltage Vg output by the secondary-side control chip IC2 to the gate of the switch Q2 is at a high level (10 V), and the switch Q2 is turned on to supply power to the load Rload. At the same time, a voltage of the secondary-side coil N2 of the transformer Tr is clamped by an output voltage Vout. The leakage inductor Lk of the primary-side coil N1 continues to charge the capacitor C1 and the junction capacitor of the switch Q1, energy is transferred to the capacitor, the current of the leakage inductor Lk continues to decrease, and the voltage (Q1 Vds) of the connection point SW increases to a maximum value and remains stable. In addition, the bus capacitor Cbus is charged through the diode D1 based on the current I_Lr of the inductor Lr. When the current Ip reaches zero, the voltage of the capacitor C1 decreases to a minimum, a current direction of the capacitor C1 is reversed, and this phase ends.

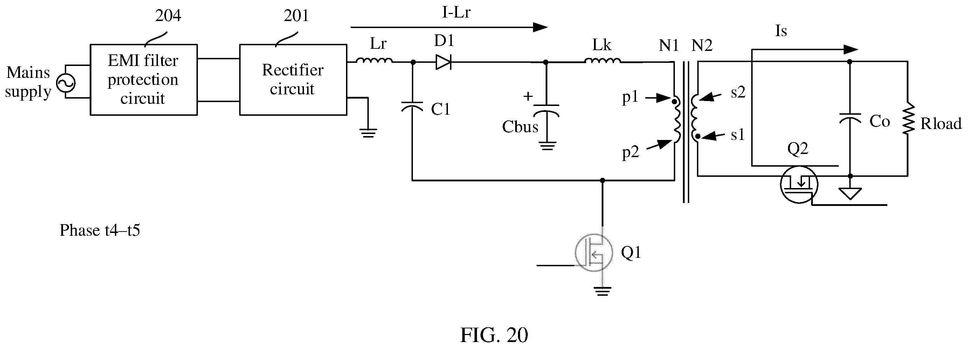

In a phase t4-t5, an equivalent circuit is shown in FIG. 20. The gate voltage Vg output by the secondary-side control chip IC2 to the gate of the switch Q2 is at a high level (10 V), the current Is of the secondary-side coil N2 continues to supply power to the load Rload, and the current Is gradually decreases. At the same time, the current of the inductor Lr continues to be used to charge the Cbus capacitor and gradually decreases. In this phase, the voltage (Q1 Vds) of the connection point SW remains at a maximum value, and a voltage and a current of the capacitor C1 remain stable, a current of the leakage inductor Lk decreases and is stable around 0. When the current Is of the secondary-side coil N2 decreases to zero, this phase ends. The phase t3-t5 forms the phase T3 in FIG. 12.

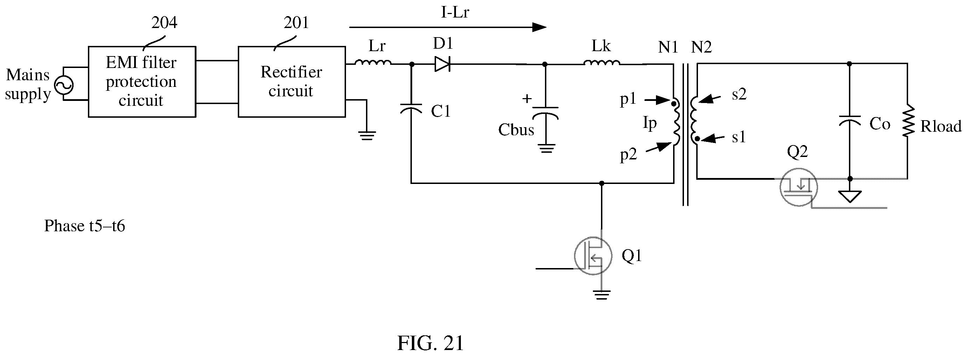

In a phase t5-t6, an equivalent circuit is shown in FIG. 21. This phase is the same as a phase before t0. The gate voltage Vg output by the primary-side control chip IC1 to the gate of the switch Q1 is at a low level (0 V), the gate voltage Vg output by the secondary-side control chip IC2 to the gate of the switch Q2 is at a low level (0 V), and the gate voltage Vg output by the auxiliary control chip IC3 to the gate of the switch Q3 is at a low level (0 V). The switch Q1 connected to the primary-side coil N1 is turned off under control of the primary-side control chip IC1, the switch Q2 connected to the secondary-side coil N2 is turned off under control of the secondary-side control chip IC2, and the switch Q3 connected to the secondary-side coil N3 is turned off under control of the auxiliary control chip IC3. A topology of the flyback switching power supply circuit works in a discontinuous current mode, and a current I-Lr of Lr continues to be used to charge the bus capacitor Cbus through the diode D1. A moment t6 is the same as the moment t0, and then actions at t0 to t6 are repeated.

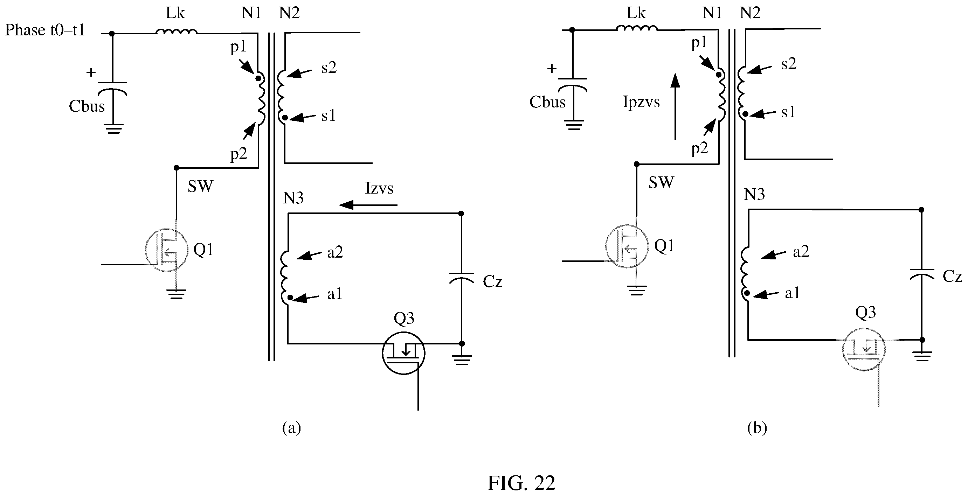

A difference between FIG. 10 and FIG. 11 lies in that the first end a1 of the auxiliary coil N3 is connected to the capacitor Cz in a different manner as a dotted terminal. In first duration of t0-t1, as shown in (a) in FIG. 22, Q3 is turned on, and the capacitor Cz charges the auxiliary coil N3. Therefore, a direction of the formed current Izvs is from the undotted terminal (a2) to the dotted terminal (a1), the voltage of the primary-side coil N1 is clamped by the induced magnetic field of the auxiliary coil N3, and the voltage VN1 of the primary-side coil N1=Vzvs/N3*N1. Vzvs is a voltage of the auxiliary coil N3, N3 is a quantity of turns of the auxiliary coil, N1 is a quantity of turns of the primary-side coil, and VN1 indicates that the dotted terminal p1 is negative and the undotted terminal p2 is positive. Because Q1 is turned off, a current from the dotted terminal p1 to the undotted terminal p2 cannot be generated. Then, in second duration of t0-t1, as shown in (b) in FIG. 22, Q3 is turned off. Because the transformer is demagnetized, the primary-side coil N1 generates a current Ipzvs from the undotted terminal p2 to the dotted terminal p1. Therefore, discharging may be performed on the connection point SW between the switch Q1 and the primary-side coil N1 based on the current Ipzvs. Phases after t1 are the same as those in the foregoing examples and details are not described again. In addition, if the solution shown in FIG. 7 or FIG. 8 is adopted, that is, the capacitor Co is used to charge the secondary-side coil N2 in the phase t0-t1, to decrease the voltage Vds when Q1 is turned on, the secondary-side coil N2 generates the current Is to charge the capacitor Co in the phase t3-t5. Therefore, this ensures that the capacitor Co outputs the current Izvs to the secondary-side coil N2 in a phase to-tl of a next working cycle.

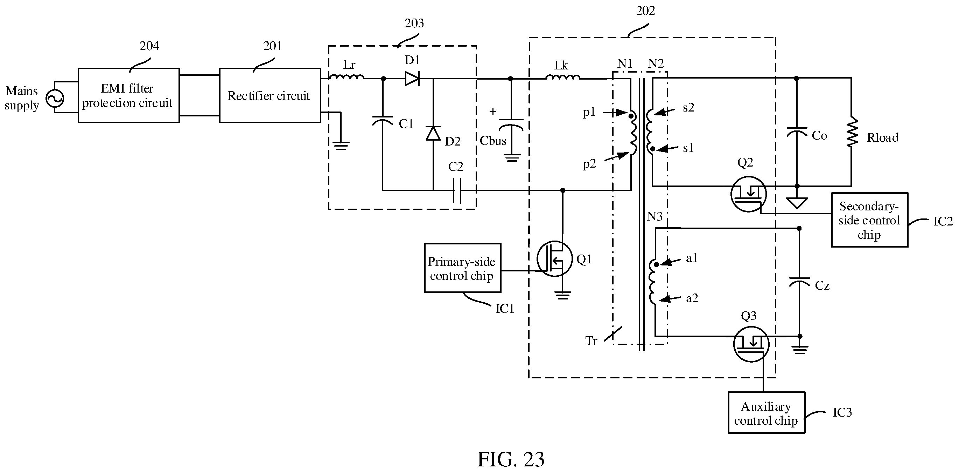

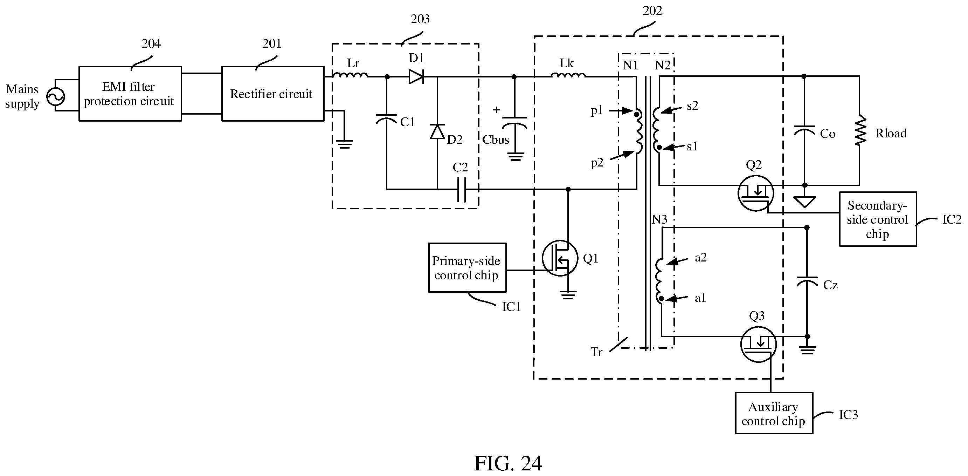

In addition, with reference to FIG. 23 and FIG. 24, a diode D2 and a capacitor C2 that are used for voltage clamping may be further added. For a connection relationship and a function of the diode D2 and the capacitor C2, refer to the description in FIG. 8. Because functions of the diode D2 and the capacitor C2 are mainly to clamp the source-drain voltage Vds of Q1 at a low level, an upper limit of Vds of Q1 in FIG. 15 is mainly limited, and working of other parts is not affected.

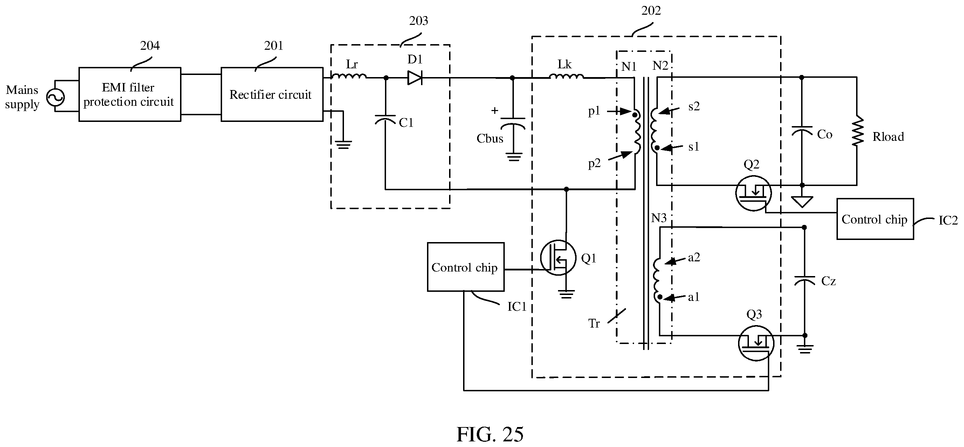

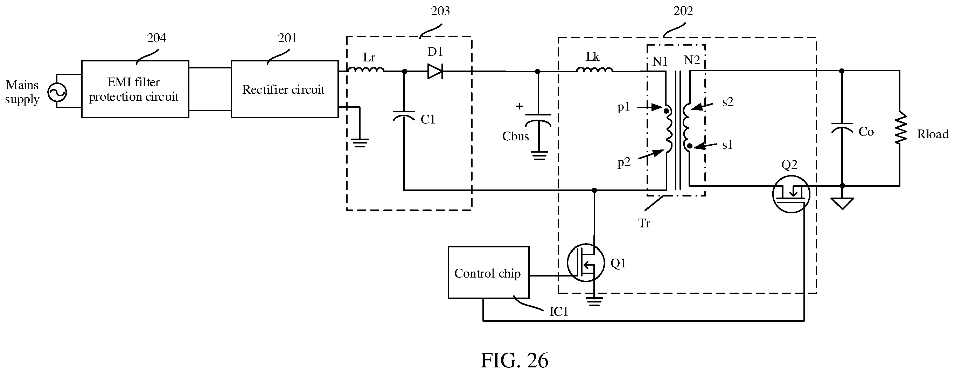

In addition, in some examples, with reference to FIG. 25, the primary-side control chip IC1 and the auxiliary control chip IC3 may alternatively be integrated into a same control chip IC1 for implementation. Alternatively, as shown in FIG. 26, the primary-side control chip IC1 and the secondary-side control chip IC2 are integrated into a same control chip IC1 for implementation.

It should be noted that, when the primary-side control chip IC1 and the secondary-side control chip IC2 use discrete devices (as shown in FIG. 8) to implement the solution of controlling the switching power supply circuit based on the control time sequence shown in FIG. 13, a bus used for time sequence synchronization needs to be further disposed between the primary-side control chip IC1 and the secondary-side control chip IC2, so that the primary-side control chip IC1 and the secondary-side control chip IC2 provide a gate drive voltage to a corresponding switch by referring to a same time sequence.

Although this application is described with reference to embodiments, in a process of implementing this application that claims protection, a person skilled in the art may understand and implement other variations of the disclosed embodiments by viewing the accompanying drawings, disclosed content, and the appended claims. In the claims, "comprising" does not exclude another component or another step, and "a" or "one" does not exclude a meaning of a plurality. Some measures are recorded in dependent claims that are different from each other, but this does not mean that these measures cannot be combined to produce a better effect.

The foregoing has described embodiments of this application. The foregoing descriptions are examples, not exhaustive, and are not limited to the disclosed embodiments. Many modifications and changes are apparent to those of ordinary skill in the art without departing from the scope and spirit of the illustrated embodiments. Selection of terms used in this specification is intended to best describe principles of embodiments, actual applications, or improvements to technologies in the market, or to enable another person of ordinary skill in the art to understand embodiments disclosed in this specification.

## Claims

1. A switching power supply circuit, comprising:
a transformer and a first switch, wherein the transformer has a primary-side coil and a first coil, and the primary-side coil is connected to the first switch;
a second switch and a first capacitor that are connected in series between a first end and a second end of the first coil;
a first control chip, wherein the first control chip is connected to a control end of the first switch; and
a second control chip, wherein the second control chip is connected to a control end of the second switch;
the second control chip is configured to: in a first phase, control the second switch to be turned on, or control the second switch to be turned on for predetermined duration and then turned off;
the first control chip is configured to control, in the first phase, the first switch to be turned off; and
the second control chip is further configured to control, in a second phase after the first phase, the second switch to be turned off, the first control chip is further configured to control, in the second phase, the first switch to be turned on, and the switching power supply circuit charges the primary-side coil in the second phase, wherein the first phase and the second phase are in a same working cycle.

2. The switching power supply circuit according to claim 1, wherein the transformer further comprises a secondary-side coil, the switching power supply circuit further comprises a third switch and a second capacitor that are connected in series between a first end and a second end of the secondary-side coil, and two ends of the second capacitor are configured to connect to a load;
the switching power supply circuit further comprises a third control chip;
the third control chip is connected to a control end of the third switch;
the third control chip is configured to control, in the first phase and the second phase, the third switch to be turned off; and
the second control chip is further configured to control, in a third phase after the second phase, the second switch to be turned off, the first control chip is further configured to control, in the third phase, the first switch to be turned off, the third control chip is configured to control a turn-on duty cycle of the third switch in the third phase, and the switching power supply circuit charges the second capacitor through the secondary-side coil in the third phase, wherein the first phase, the second phase, and the third phase are in a same working cycle.

3. The switching power supply circuit according to claim 1, wherein the first coil is a secondary-side coil, and two ends of the first capacitor are configured to connect to a load; and
the second control chip is further configured to control a turn-on duty cycle of the second switch in a third phase after the second phase, the first control chip is further configured to control, in the third phase, the first switch to be turned off, and the switching power supply circuit charges the first capacitor through the secondary-side coil in the third phase, wherein the first phase, the second phase, and the third phase are in a same working cycle.

4. The switching power supply circuit according to any one of claims 1 to 3, wherein
duration of the first phase is shorter than duration of the second phase.

5. The switching power supply circuit according to claim 2 or 3, wherein
duration of the first phase is shorter than duration of the third phase.

6. The switching power supply circuit according to any one of claims 1 to 5, wherein
the switching power supply circuit further comprises a first inductor, the first inductor is connected to a first end of the primary-side coil, and a second end of the primary-side coil is connected to the first switch.

7. The switching power supply circuit according to any one of claims 1 to 6, wherein
the switching power supply circuit further comprises a bus capacitor, a first end of the bus capacitor is connected to the first end of the primary-side coil, a second end of the bus capacitor is grounded, and the second end of the primary-side coil is connected to the first switch.

8. The switching power supply circuit according to any one of claims 1 to 7, wherein the switching power supply circuit further comprises a rectifier circuit, the rectifier circuit is connected to the first end of the primary-side coil, and the second end of the primary-side coil is connected to the first switch.

9. The switching power supply circuit according to any one of claims 1 to 8, wherein the switching power supply circuit further comprises a second inductor, a first diode, and a third capacitor;
a first end of the second inductor is connected to the rectifier circuit, and a second end of the second inductor is connected to an anode of the first diode;
a cathode of the first diode is connected to the first end of the primary-side coil, and the second end of the primary-side coil is connected to the first switch; and
a first end of the third capacitor is connected to the second end of the second inductor, and a second end of the third capacitor is connected to the second end of the primary-side coil.

10. The switching power supply circuit according to claim 9, wherein the switching power supply circuit further comprises a second diode and a fourth capacitor;
a cathode of the second diode is connected to the first end of the primary-side coil;
an anode of the second diode is connected to the second end of the third capacitor; and
a first end of the fourth capacitor is connected to the second end of the third capacitor, and a second end of the fourth capacitor is connected to the second end of the primary-side coil.

11. A switching power supply circuit, comprising:
a transformer and a first switch, wherein the transformer has a primary-side coil, a secondary-side coil, and a first coil, and the primary-side coil is connected to the first switch;
a second switch and a first capacitor that are connected in series between a first end and a second end of the first coil;
a third switch and a second capacitor that are connected in series between a first end and a second end of the secondary-side coil, wherein two ends of the second capacitor are configured to connect to a load;
a first control chip, wherein the first control chip is connected to a control end of the first switch;
a second control chip, wherein the second control chip is connected to a control end of the second switch; and
a third control chip, wherein the third control chip is connected to a control end of the third switch.

12. A switching power supply, comprising a housing, and the switching power supply circuit, according to any one of claims 1 to 11, disposed in the housing.

13. The switching power supply according to claim 12, wherein the switching power supply comprises a charger.

14. An electronic device, comprising the switching power supply according to claim 12 and a load connected to the switching power supply.

15. A power supply system, comprising the switching power supply according to claim 12 or 13 and an electronic device connected to the switching power supply.
